# EUROPÄISCHE PATENTSCHRIFT

(11) **EP 4 291 436 B1**
(45) Veröffentlichungstag und Bekanntmachung des Hinweises auf die Patenterteilung: **21.05.2025**
(21) Anmeldenummer: 22700949.5
(22) Anmeldetag: 18.01.2022
(51) Int. Cl.: B60K 35/10, B60K 35/21, G06F 3/01, G06F 3/0362

(54) **BEDIENVORRICHTUNG FÜR EIN KRAFTFAHRZEUG SOWIE KRAFTFAHRZEUG MIT EINER BEDIENVORRICHTUNG**
OPERATING DEVICE FOR A MOTOR VEHICLE, AND MOTOR VEHICLE HAVING AN OPERATING DEVICE
DISPOSITIF DE COMMANDE UTILISATEUR POUR UN VÉHICULE AUTOMOBILE ET VÉHICULE AUTOMOBILE ÉQUIPÉ D'UN TEL DISPOSITIF DE COMMANDE UTILISATEUR

(30) Priorität: 09.02.2021 DE 102021201185
(43) Veröffentlichungstag der Anmeldung: 20.12.2023
(73) Patentinhaber: VOLKSWAGEN AKTIENGESELLSCHAFT, 38440 Wolfsburg (DE)
(72) Erfinder: THIELE, Henning, 38440 Wolfsburg (DE); HUWER, Wojciech, 38110 Braunschweig (DE); GRÜNEBERG, Anette, 30657 Hannover (DE)
(86) Internationale Anmeldenummer: PCT/EP2022/050941
(87) Internationale Veröffentlichungsnummer: WO 2022/171388

(56) Entgegenhaltungen:
- DE-A1- 102011 114 051
- DE-A1- 102015 115 044
- GB-A- 2 494 420
- US-A1- 2017 140 757

## Beschreibung

Die vorliegende Erfindung betrifft eine Bedienvorrichtung für ein Kraftfahrzeug sowie ein Kraftfahrzeug mit einer Bedienvorrichtung.

Aus der GB 2 494 420 A ist zur Steuerung eines Systems ein Multifunktionsdrehsteuergerät bekannt, welches Steuersignale an das System in Abhängigkeit von einer Betätigung eines manuell bedienbaren Drehmittels und eines Schalters liefert. Das Multifunktionsdrehsteuergerät umfasst ein Display, welches Informationen über eine Vielzahl von Betriebsmodi des Systems in einem kreisförmigen Bereich des Multifunktionsdrehsteuergeräts anzeigt. Der Schalter kann ein mechanischer Schalter sein und durch Drücken eines Knopfs, insbesondere des Drehmittels, des Displays oder eines Fensterelements, durch welches das Display betrachtet werden kann, betätigt werden. Das Display kann einen Touchscreen umfassen und innerhalb eines kreisförmigen Bereichs angeordnet sein, welcher von dem Drehmittel umschlossen ist. Jeweilige Betriebsmodi für Kontrollfunktionen können mittels des Schalters und des Drehmittels in Kombination ausgewählt und kontrolliert werden. Das Multifunktionsdrehsteuergerät kann dazu eingerichtet sein, eine Klimaanlage zu steuern, einschließlich Funktionen einer Belüftung, einer Lufttemperatur und einer Sitzheizungs- beziehungsweise Sitzkühlungstemperatur in einem Kraftfahrzeug.

Weiterhin ist aus der DE 10 2005 049 513 A1 eine Bedienerschnittstelleneinheit für ein Fahrzeug bekannt, welche mindestens ein Nutzerbedienelement für eine Bedienereinstellung sowie einen Feldänderungssensor umfasst, der zum Erfassen eines Objekts in der Nähe des mindestens einen Nutzerbedienelement konfiguriert ist. Überdies umfasst die Bedienerschnittstelleneinheit eine Steuereinheit in elektrischer Kommunikation mit dem Feldänderungssensor und dem mindestens einen Nutzerbedienelement sowie eine elektronische Anzeigeeinheit in elektrischer Kommunikation mit der Steuereinheit, die zur Steuerung der elektronischen Anzeigeeinheit basierend auf dem Feldänderungssensor konfiguriert ist. Das mindestens eine Nutzerbedienelement ist ein Ringknopf und die elektronische Anzeigeeinheit ist in einem Körper des Ringknopfes integriert. Hierbei ist die elektronische Anzeigeeinheit eine runde elektronische Anzeigeeinheit, wobei eine Vielzahl von Tasten am Umfang und um die elektronische Anzeigeeinheit herum angeordnet ist. Die Bedienerschnittstelleneinheit umfasst somit den großen Ringknopf mit der integrierten Anzeigeeinheit im Zentrum des Ringknopfes und ist für den Betrieb mit Mehrfachfunktionen eingerichtet.

Weiterhin ist aus der DE 10 2007 035 564 A1 eine Bedieneinrichtung zum Bedienen einer Vielzahl von Funktionen in einem Fahrzeug, mit einem Mehrfachdrehbedienelement bekannt. Dieses Mehrfachdrehbedienelement umfasst mehrere, koaxial in einer gemeinsamen Drehachse drehbetätigbar angeordnete Drehsteller. Diese Drehsteller sind unterschiedlichen Funktionen des Fahrzeugs zugeordnet. Jeder Drehsteller kann einen radial innenliegenden drehbetätigbaren Drehkörper und einen radial außenliegenden drehfesten ringförmigen Displaykörper zur optischen Darstellung von dem jeweiligen Drehkörper zugeordneten Bedieninformationen aufweisen. Hierbei umschließt der ringförmige Displaykörper den zugehörigen Drehkörper koaxial.

Die DE 10 2015 115 044 A1 offenbart ein einen Drehschalter und eine berührungsempfindliche Anzeige aufweisendes System zur Eingabe von Befehlen und zur Bedienung unterschiedlicher Funktionen. Durch eine mechanische Drehbewegung des Drehschalters werden Schaltzustände eingestellt, wobei die berührungsempfindliche Anzeige zum Auswählen und Anzeigen einer einzustellenden Funktion ausgebildet ist.

Die DE 102011 114 051 A1 offenbart eine Bedienvorrichtung für ein Kraftfahrzeug, mit wenigstens einem dreh und drückbaren Bauteil, das mit einer berührungssensitiven Eingabe- und/oder Darstellungsfläche versehen ist, wobei durch Drehen und/oder Drücken des dreh und drückbaren Bauteils Funktionen bedienbar sind und durch Berührung der berührungssensitiven Eingabe und/oder Darstellungsfläche eine Umschaltung zwischen zwei bedienbaren Funktionen durchführbar ist.

Weiter offenbart eine in der US 2017 / 0 140 757 A1 dargelegte Ausführungsform eine Sprachinteraktionssystems ein Kraftfahrzeug-Armaturenbrett mit Interaktionsstilen, Bildschirmen und Einstellungen. Es können Text, Symbole und Sprache angepasst an ein bestimmtes Fahrzeug dargestellt werden, insbesondere basierend auf Konfigurationseinstellungen, Interaktionsmodi und benutzerdefinierten Einstellungen durch bestimmte Benutzer.

Aufgabe der vorliegenden Erfindung ist es, eine Lösung zu schaffen, durch welche ein Ansteuern besonders vieler Fahrzeugfunktionen eines Kraftfahrzeugs über besonders wenige Benutzereingaben mittels besonders weniger Bedienelemente ermöglicht wird.

Diese Aufgabe wird durch den Gegenstand des Anspruchs 1 gelöst. Weitere mögliche Ausgestaltungen der Erfindung sind in den Unteransprüchen, der Beschreibung und den Figuren offenbart.

Die Erfindung betrifft eine Bedienvorrichtung für ein Kraftfahrzeug, mit einem Basiselement, welches dazu eingerichtet ist, an einem Interieurbauteil des Kraftfahrzeugs befestigt zu werden. Weiterhin umfasst die Bedienvorrichtung eine Bildschirmeinrichtung, welche dazu eingerichtet ist, einen Fahrmodus des Kraftfahrzeugs anzuzeigen. Hierbei ist die Bildschirmeinrichtung insbesondere dazu eingerichtet, ein den Fahrmodus charakterisierendes Lichtsignal auszugeben, wodurch der Fahrmodus des Kraftfahrzeugs mittels der Bildschirmeinrichtung optisch anzeigbar ist. Die Bildschirmeinrichtung weist weiterhin eine berührsensitive Oberfläche auf, welche dazu eingerichtet ist, eine erste Benutzereingabe zu empfangen. Hierbei kann die erste Benutzereingabe insbesondere durch eine Berührung der berührsensitiven Oberfläche repräsentiert sein. Die Bildschirmeinrichtung ist weiterhin dazu eingerichtet, die erste empfangene Benutzereingabe für eine Steuereinrichtung der Bedienvorrichtung bereitzustellen. Die Bedienvorrichtung umfasst des Weiteren ein Ringelement, welches die Bildschirmeinrichtung umfangsseitig umschließend angeordnet ist. Das Ringelement ist dazu eingerichtet, relativ zu dem Basiselement in unterschiedlichen Drehstellungen angeordnet zu werden. Das Ringelement kann durch Drehen um eine Drehachse zwischen den jeweiligen unterschiedlichen Drehstellungen verstellt werden. Weiterhin ist das Ringelement dazu eingerichtet, eine durch ein Verstellen des Ringelements zwischen den Drehstellungen charakterisierte, zweite Benutzereingabe zu empfangen. Diese zweite Benutzereingabe kann das Ringelement für die Steuereinrichtung bereitstellen. Das Ringelement umschließt die Bildschirmeinrichtung zumindest in einem Längenbereich entlang der Drehachse radial vollumfänglich nach außen. Somit ist die Bildschirmeinrichtung zumindest bereichsweise innerhalb eines von dem Ringelement radial nach außen umschlossenen Volumen angeordnet. Die Bildschirmeinrichtung kann in axialer Richtung des Ringelements über das Ringelement vorspringen, hinter dem Ringelement zurückstehen oder bündig mit dem Ringelement abschließen.

Die Bedienvorrichtung umfasst des Weiteren die Steuereinrichtung, welche dazu eingerichtet ist, in Abhängigkeit von der ersten Benutzereingabe und/oder der zweiten Benutzereingabe ein Steuersignal bereitzustellen, welches einen einzustellenden Fahrmodus und/oder einen einzustellenden Ambientemodus des Kraftfahrzeugs charakterisiert. Somit ist die Steuereinrichtung dazu eingerichtet, die erste Benutzereingabe von der Bildschirmeinrichtung und die zweite Benutzereingabe von dem Ringelement zu empfangen und in Abhängigkeit von der ersten Benutzereingabe und/oder der zweiten Benutzereingabe den einzustellenden Fahrmodus und/oder den einzustellenden Ambientemodus zu ermitteln. Das diesen ermittelten Fahrmodus und/oder den einzustellenden Ambientemodus charakterisierendes Steuersignal kann die Steuereinrichtung für ein elektronische Recheneinrichtung des Kraftfahrzeugs bereitstellen, welche dazu eingerichtet ist, den durch das Steuersignal charakterisierten Fahrmodus beziehungsweise den durch das Steuersignal charakterisierten Ambientemodus in dem Kraftfahrzeug einzustellen. Mittels der Recheneinrichtung des Kraftfahrzeugs kann ein Ausgeben des ausgewählten und/oder eingestellten Ambientemodus und/oder des ausgewählten und/oder eingestellten Fahrmodus mittels einer Anzeigeeinrichtung, insbesondere einer weiteren Bildschirmeinrichtung, ausgelöst werden. Bei der weiteren Bildschirmeinrichtung handelt es sich insbesondere um ein Display im Fahrzeuginnenraum des Kraftfahrzeugs. Das Display kann insbesondere Teil eines sogenannten Infotainmentgeräts sein. Mittels der Steuereinrichtung kann in Abhängigkeit von der ersten Benutzereingabe und/oder der zweiten Benutzereingabe das Einstellen des durch die Benutzereingaben charakterisierten einzustellenden Fahrmodus beziehungsweise Ambientemodus ausgelöst werden. Mit anderen Worten kann von einer Person durch Betätigen der berührsensitiven Oberfläche und/oder durch Drehen des Ringelements um die Drehachse die jeweilige Benutzereingabe getätigt werden, über welche in einem Menü ein Fahrmodus aus mehreren vorgegebenen Fahrmodi oder ein Ambientemodus aus mehreren vorgegebenen Ambientemodi auswählbar ist. Dieser über das Menü ausgewählte Fahrmodus charakterisiert den in dem Kraftfahrzeug einzustellenden Fahrmodus. Der ausgewählte Ambientemodus kann mehrere Einstellungen des Kraftfahrzeugs, insbesondere unterschiedlicher Fahrzeugkomponenten des Kraftfahrzeugs, charakterisieren. Hierbei kann der eingestellte Ambientemodus eine Belüftung und/oder eine Temperierung und/oder eine Lautstärke von einem in einem Fahrzeuginnenraum des Kraftfahrzeugs wiedergegebenen Medien und/oder einer Beleuchtung des Fahrzeuginnenraums charakterisieren. Über das Auswählen des einzustellenden Ambientemodus kann somit besonders einfach die Einstellungen für die unterschiedlichen Fahrzeugkomponenten des Kraftfahrzeugs durch besonders wenige Benutzereingaben eingestellt werden. Die Bedienvorrichtung ermöglicht somit ein besonders einfaches und komfortables Auswählen des Fahrmodus beziehungsweise des Ambientemodus für das Kraftfahrzeug.

Die Steuereinrichtung ist des Weiteren dazu eingerichtet, das Anzeigen des Fahrmodus mittels der Bildschirmeinrichtung auszulösen. Das bedeutet, dass die Steuereinrichtung die Bildschirmeinrichtung steuert und insbesondere das Anzeigen des Fahrmodus durch die Bildschirmeinrichtung steuert. Die Bedienvorrichtung ermöglicht somit für einen Fahrzeuginsassen ein besonders einfaches Erkennen des Fahrmodus anhand des von der Bildschirmeinrichtung ausgegebenen, den Fahrmodus charakterisierenden ersten Lichtsignals. Weiterhin ist die Bedienvorrichtung dazu eingerichtet, das Steuersignal bereitzustellen, welches den über die Bedienvorrichtung ausgewählten, einzustellenden Fahrmodus charakterisiert, wodurch über die Bedienvorrichtung von einer Person das Einstellen des Fahrmodus besonders einfach gesteuert werden kann.

Die Bedienvorrichtung weist einen Näherungssensor auf, welcher dazu eingerichtet ist, eine durch eine Annäherung an den Näherungssensor charakterisierte dritte Benutzereingabe zu empfangen. Weiterhin kann die Steuereinrichtung dazu eingerichtet sein, bei Empfangen der dritten Benutzereingabe die Bildschirmeinrichtung in einen Bereitschaftsmodus zu verstellen. Der Näherungssensor kann somit dazu eingerichtet sein, eine Annäherung eines Objekts und/oder eines Fahrzeuginsassen des Kraftfahrzeugs an die Bedienvorrichtung zu ermitteln und ein die ermittelte Annäherung charakterisierendes Annäherungssignal für die Steuereinrichtung bereitzustellen. In Abhängigkeit von dem empfangenen Annäherungssignal kann die Steuereinrichtung ermitteln, ob die ermittelte Annäherung die dritte Benutzereingabe charakterisiert. Dabei kann die Steuereinrichtung dazu eingerichtet sein, die Bildschirmeinrichtung in den Bereitschaftsmodus zu verstellen, wenn ermittelt worden ist, dass die Annäherung die dritte Benutzereingabe repräsentiert. Der Näherungssensor ermöglicht somit, dass die Bildschirmeinrichtung aufgrund der Annäherung des Objekts und/oder des Fahrzeuginsassen an den Näherungssensor aufgeweckt und somit in den Bereitschaftsmodus versetzt wird. Insbesondere ist der Näherungssensor dazu eingerichtet, eine Betätigung der Bedienvorrichtung durch die dritte Benutzereingabe zu detektieren, insbesondere, bevor ein direkter Kontakt des Fahrzeuginsassen mit der Bedienvorrichtung besteht. Hierdurch kann die Bildschirmeinrichtung, sofern der Bereitschaftsmodus in der Bildschirmeinrichtung nicht eingestellt ist, in einem Energiesparmodus betrieben werden, in welchem ein Energieverbrauch der Bildschirmeinrichtung im Vergleich zum Bereitschaftsmodus verringert ist. Der Näherungssensor ermöglicht somit ein besonders energieeffizientes Betreiben der Bedienvorrichtung.

Alternativ oder zusätzlich ist ein Leuchtringelement vorgesehen, welches dazu eingerichtet ist, ein das Ringelement umschließendes Lichtsignal auszugeben. Hierbei kann dieses weitere, zweite Lichtsignal den eingestellten Fahrmodus und/oder den eingestellten Ambientemodus charakterisieren. Das Leuchtringelement kann insbesondere am Basiselement der Bedienvorrichtung gehalten sein. Hierbei kann es insbesondere vorgesehen sein, dass das Leuchtringelement relativ zu dem Basiselement fixiert ist. Alternativ zu der Anordnung des Leuchtringelements an dem Basiselement kann das Leuchtringelement an dem Ringelement angeordnet, insbesondere fixiert sein. Hierbei kann das Leuchtringelement gemeinsam mit dem Ringelement um die Drehachse relativ zu dem Basiselement gedreht werden. Das Leuchtringelement kann beispielsweise in eine Mantelfläche des Ringelements integriert sein. Insbesondere umrahmt das mittels des Leuchtringelements ausgebbare weitere, zweite Lichtsignal das Ringelement. Hierdurch kann das Ringelement für die Person besonders gut erkennbar sein, wodurch die Person das Ringelement besonders einfach bedienen kann. Das Leuchtringelement kann insbesondere dazu eingerichtet sein, das zweite Lichtsignal mit einer Farbe auszugeben, welche von der mittels der Bildschirmeinrichtung ausgegebenen Anzeige umfasst ist, insbesondere farblich mit der von der Bildschirmeinrichtung bereitgestellten Anzeige übereinstimmt. Das Leuchtringelement ermöglicht somit für Fahrzeuginsassen des Kraftwagens ein besonders einfaches Erkennen des Fahrmodus und/oder des Ambientemodus. Weiterhin ermöglicht das Leuchtringelement ein besonders einfaches und sicheres Bedienen des Ringelements bei dunklen Lichtverhältnissen im Fahrzeuginnenraum des Kraftfahrzeugs, da aufgrund des zweiten Lichtsignals eine Position der Bedienvorrichtung für Fahrzeuginsassen besonders gut erkennbar ist.

Es ist in einer Weiterbildung vorgesehen, dass die Steuereinrichtung dazu eingerichtet ist, ein Anzeigen des eingestellten Fahrmodus oder eines in Abhängigkeit von der ersten Benutzereingabe und/oder der zweiten Benutzereingabe für ein Einstellen ausgewählten Fahrmodus mittels der Bildschirmeinrichtung auszulösen. Das bedeutet, dass mittels der Bildschirmeinrichtung der bereits in dem Kraftfahrzeug eingestellte Fahrmodus oder der in Abhängigkeit von der ersten Benutzereingabe und/oder der zweiten Benutzereingabe ausgewählte, einzustellende Fahrmodus angezeigt wird. Folglich ermöglicht die Bedienvorrichtung, dass die Person über die Bildschirmeinrichtung besonders einfach und besonders gut erkennen kann, welcher Fahrmodus in dem Kraftfahrzeug eingestellt ist beziehungsweise welcher in dem Kraftfahrzeug einzustellende Fahrmodus mittels der Bedienvorrichtung ausgewählt ist. Beispielsweise kann es vorgesehen sein, dass die Steuereinrichtung dazu eingerichtet ist, ein Fahrmodussignal zu empfangen, insbesondere von der elektronischen Recheneinrichtung des Kraftfahrzeugs, wobei das Fahrmodussignal den in dem Kraftfahrzeug eingestellten Fahrmodus charakterisiert. Die Steuereinrichtung kann weiterhin dazu eingerichtet sein, ein Anzeigen des durch das Fahrmodussignal charakterisierten, in dem Kraftfahrzeug eingestellten Fahrmodus durch die Bildschirmeinrichtung auszulösen. Um für einen Fahrzeuginsassen ein besonders einfaches Erkennen des mittels der Bildschirmeinrichtung angezeigten Fahrmodus zu ermöglichen und/oder ein Lenken einer Aufmerksamkeit des Fahrzeuginsassen auf den mittels der Bildschirmeinrichtung angezeigten Fahrmodus zu ermöglichen, kann die Steuereinrichtung dazu eingerichtet sein, ein Ausgeben eines bewegten, den Fahrmodus charakterisierenden Bildes mittels der Bildschirmeinrichtung auslösen. Somit kann die Steuereinrichtung dazu eingerichtet sein, die Bildschirmeinrichtung derart anzusteuern, dass diese ein den Fahrmodus charakterisierendes animiertes Bild ausgibt. Hierdurch kann der mittels der Bildschirmeinrichtung angezeigte Fahrmodus für den Fahrzeuginsassen besonders gut erkennbar sein.

In einer Weiterbildung der Erfindung ist es vorgesehen, dass die Steuereinrichtung dazu eingerichtet ist, ein Anzeigen des eingestellten Ambientemodus und/oder ein Anzeigen eines für ein Einstellen ausgewählten Ambientemodus mittels der Bildschirmeinrichtung auszulösen. Hierbei kann der für das Einstellen ausgewählte Ambientemodus in Abhängigkeit von der ersten Benutzereingabe und/oder der zweiten Benutzereingabe ausgewählt werden. Für ein Ermitteln des eingestellten Ambientemodus kann die Steuereinrichtung dazu eingerichtet sein, ein Ambientesignal von der elektronischen Recheneinrichtung zu empfangen, welches den eingestellten Ambientemodus charakterisiert. Mittels der Steuereinrichtung ist die Bildschirmeinrichtung derart ansteuerbar, dass diese den eingestellten oder den einzustellenden Fahrmodus und/oder den eingestellten oder den einzustellenden Ambientemodus anzeigt. Hierbei kann die Bildschirmeinrichtung dazu eingerichtet sein, den eingestellten oder für ein Einstellen ausgewählten Fahrmodus gemeinsam und somit gleichzeitig mit dem eingestellten Ambientemodus oder dem für ein Einstellen ausgewählten Ambientemodus anzuzeigen. Aufgrund des Anzeigens des ausgewählten beziehungsweise des eingestellten Ambientemodus ist mittels der Bildschirmeinrichtung für einen Fahrzeuginsassen besonders einfach der eingestellte beziehungsweise der ausgewählte Ambientemodus erkennbar.

In einer weiteren Ausgestaltung der Erfindung ist eine Arretiereinrichtung vorgesehen, welche dazu eingerichtet ist, das Ringelement mechanisch oder elektromagnetisch in den jeweiligen Drehstellungen zu halten. Das bedeutet, dass mittels der Arretiereinrichtung das Ringelement in den jeweiligen Drehstellungen mit einer jeweiligen Haltekraft arretierbar ist. Durch Überwinden der jeweiligen Haltekraft kann von einer Person das Ringelement manuell zwischen den jeweiligen Drehstellungen verdreht werden. Die Arretiereinrichtung ermöglicht, dass eine Gefahr eines unbeabsichtigten Verstellens des Ringelements durch eine Person besonders gering gehalten werden kann.

Es kann hierbei insbesondere vorgesehen sein, dass das Ringelement dazu eingerichtet ist, in jeweiligen um 30 Grad zueinander versetzten Drehstellungen arretiert zu werden. Das bedeutet, dass zwölf unterschiedliche Drehstellungen für das Ringelement vorgegeben sein können, in welchen das Ringelement jeweils anordenbar ist. Durch ein jeweiliges Arretieren des Ringelements in den jeweiligen Drehstellungen mit der Haltekraft kann einer das Ringelement bedienenden Person eine haptische Rückmeldung darüber gegeben werden, wie viele Drehstellungen durch das Ringelement beim Verstellen des Ringelements durchlaufen werden. Insbesondere kann durch jede der vorgegebenen Drehstellungen eine unterschiedliche zweite Benutzereingabe charakterisiert sein, wodurch die Person durch Einstellen des Ringelements in einer jeweiligen Drehstellung eine Auswahl in einem Menü, insbesondere eine Auswahl eines Fahrmodus aus einer Vielzahl von hinterlegten Fahrmodi beziehungsweise eine Auswahl eines Ambientemodus aus einer Vielzahl von Ambientemodi, getätigt werden kann. Das Vorsehen der zwölf vorgegebenen Drehstellungen ermöglicht, dass für eine das Ringelement bedienende Person die unterschiedlichen Drehstellungen besonders gut voneinander abgegrenzt wahrnehmbar sind.

In weiterer Ausgestaltung der Erfindung ist es vorgesehen, dass die Bildschirmeinrichtung von einem zu der Bildschirmeinrichtung fixierten Aluminiumring radial umschlossen ist, wobei der Aluminiumring wiederum von dem Ringelement radial umschlossen ist. Hierbei können das Ringelement und der Aluminiumring konzentrisch zueinander angeordnet sein, wobei jeweilige Mittelachsen des Aluminiumrings und des Ringelements auf der Drehachse des Ringelements liegen können. Mittels des Aluminiumrings ist somit die Bildschirmeinrichtung optisch klar von dem Ringelement abgegrenzt, wodurch die Bildschirmeinrichtung beziehungsweise jeweilige Ränder der Bildschirmeinrichtung besonders gut für einen Fahrzeuginsassen des Kraftfahrzeugs erkennbar sind. Infolgedessen kann der Fahrzeuginsasse die Bildschirmeinrichtung besonders sicher bedienen und eine Gefahr eines Danebengreifens neben die Bildschirmeinrichtung kann besonders gering gehalten werden. Weiterhin kann der Aluminiumring ein besonders gutes Gleiten des Ringelements ermöglichen, wodurch das Ringelement besonders einfach zwischen den Drehstellungen verstellbar ist.

In weiterer Ausgestaltung der Erfindung ist es vorgesehen, dass für ein Betätigen die Bildschirmeinrichtung und/oder das Ringelement relativ zu dem Basiselement axial verschiebbar ausgebildet sind/ist. Das bedeutet, dass die Bildschirmeinrichtung und/oder das Ringelement in axialer Richtung relativ zu dem Basiselement drückbar sind/ist. Durch das Drücken der Bildschirmeinrichtung und/oder des Ringelements relativ zu dem Basiselement kann eine Bestätigung einer durch die erste Benutzereingabe und/oder die zweite Benutzereingabe getätigten Auswahl charakterisiert sein. Das Basiselement kann insbesondere bei dessen Befestigung an dem Interieurbauteil relativ zu dem Interieurbauteil fixiert sein. Um eine besonders gute Erkennbarkeit einer mittels der Bildschirmeinrichtung ausgegebenen Anzeige für Fahrzeuginsassen des Kraftfahrzeugs zu ermöglichen, kann es vorgesehen sein, dass die Bildschirmeinrichtung in ihrer Ausrichtung um die Drehachse des Ringelements relativ zu dem Basiselement fixiert ist. Das Ringelement kann relativ zu dem Basiselement um die Drehachse drehbar an dem Basiselement gehalten sein. Die axiale Verschiebbarkeit der Bildschirmeinrichtung und/oder des Ringelements relativ zu dem Basiselement ermöglicht eine Bereitstellung von besonders vielen unterschiedlichen Eingabemöglichkeiten für Fahrzeuginsassen durch die Bedienvorrichtung unter Verwendung von besonders wenigen Komponenten der Bedienvorrichtung.

Die Erfindung betrifft weiterhin ein Kraftfahrzeug mit einer Bedienvorrichtung, wie sie bereits im Zusammenhang mit der erfindungsgemäßen Bedienvorrichtung beschrieben worden ist. Hierbei ist die Bedienvorrichtung insbesondere in einem Interieurbauteil des Kraftfahrzeugs in einem Fahrzeuginnenraum des Kraftfahrzeugs gehalten. Hierbei kann die Bedienvorrichtung an einer Mittelkonsole oder an einem Armaturenbrett des Kraftfahrzeugs angeordnet sein. Vorteile und Weiterbildungen der erfindungsgemäßen Bedienvorrichtung sind als Vorteile und Weiterbildungen des erfindungsgemäßen Kraftfahrzeugs anzusehen und umgekehrt.

Die Zeichnung zeigt in:

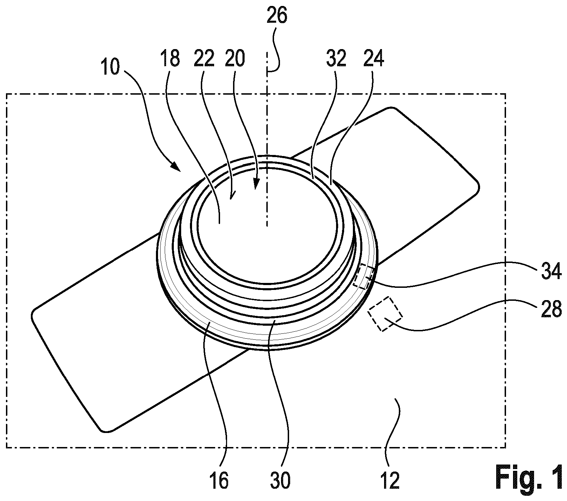

- Fig. 1: eine schematische Perspektivansicht einer Bedienvorrichtung für ein Kraftfahrzeug, welche an einem Interieurbauteil des Kraftfahrzeugs über ein Basiselement gehalten ist und welche eine von einem in unterschiedlichen Drehstellungen angeordneten Ringelement seitlich umschlossene Bildschirmeinrichtung aufweist, mittels welcher ein Fahrmodus und/oder ein Ambientemodus des Kraftfahrzeugs anzeigbar ist, wobei der in dem Kraftfahrzeug einzustellende Fahrmodus und/oder der in dem Kraftfahrzeugeinzustellende Ambientemodus mittels der Bedienvorrichtung auswählbar ist; und

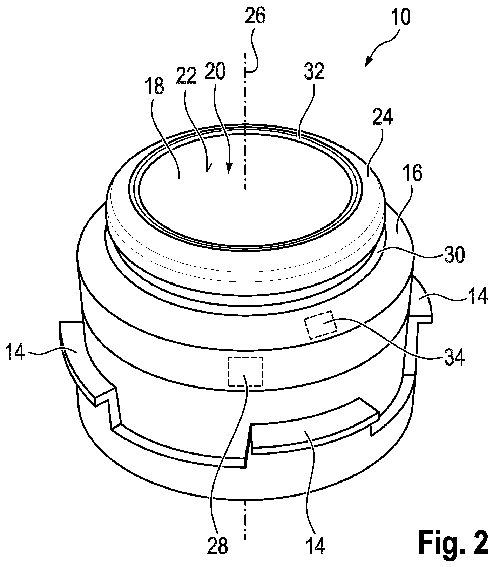

- Fig. 2: eine schematische Perspektivansicht der Bedienvorrichtung gemäß Fig. 1 mit der Bildschirmeinrichtung, über deren berührsensitive Oberfläche eine erste Benutzereingabe empfangbar ist, und mit dem Ringelement, dessen eingestellte Drehstellung eine zweite Benutzereingabe charakterisieren kann, wobei die Bedienvorrichtung eine Steuereinrichtung umfasst, mittels welcher in Abhängigkeit von der ersten Benutzereingabe und/oder der zweiten Benutzereingabe ein in dem Kraftfahrzeug einzustellender Fahrmodus und/oder in dem Kraftfahrzeug einzustellender Ambientemodus ermittelbar und für eine elektronische Recheneinrichtung des Kraftfahrzeugs bereitstellbar sind, mittels welcher der ermittelte Fahrmodus und/oder der ermittelte Ambientemodus in dem Kraftfahrzeug einstellbar sind.

Gleiche oder funktionsgleiche Elemente sind in den Figuren mit den gleichen Bezugszeichen versehen.

In Fig. 1 ist eine Bedienvorrichtung 10 gezeigt, welche in ein Interieurbauteil 12 eines Kraftfahrzeugs, vorliegend eines Kraftwagens, insbesondere eines Personenkraftwagens, integriert ist. Das bedeutet, dass die Bedienvorrichtung 10 eine Ausnehmung des Interieurbauteils 12 ausfüllend in dem Interieurbauteil 12 angeordnet ist. Die Bedienvorrichtung 10 ermöglicht es einem Fahrzeuginsassen des Kraftfahrzeugs, wenigstens eine Komponente des Kraftfahrzeugs zu steuern.

Wie in Fig. 2 erkannt werden kann, kann die Bedienvorrichtung 10 wenigstens einen, insbesondere mehrere, Befestigungsarme 14 aufweisen, über welche die Bedienvorrichtung 10 an dem Interieurbauteil 12 gehalten werden kann. Wie in den Fig. weiter erkannt werden kann, umfasst die Bedienvorrichtung 10 ein Basiselement 16, über welches die Bedienvorrichtung 10 an dem Interieurbauteil 12 befestigbar ist. Weiterhin umfasst die Bedienvorrichtung 10 eine Bildschirmeinrichtung 18, deren Anzeigefläche 20 vorliegend kreisrund ausgebildet ist. Über die Anzeigefläche 20 kann die Bildschirmeinrichtung 18 einen Fahrmodus und/oder einen Ambientemodus anzeigen. Hierbei kann die Bildschirmeinrichtung 18 dazu eingerichtet sein, ein den Fahrmodus und/oder den Ambientemodus charakterisierendes erstes Lichtsignal auszugeben. Hierbei können der Fahrmodus und/oder der Ambientemodus über eine Farbe und/oder eine Form des ersten Lichtsignals und hierbei insbesondere über einen durch das erste Lichtsignal dargestellten Schriftzug und/oder ein durch das erste Lichtsignal dargestelltes Piktogramm angezeigt werden. Hierbei kann mittels der Bildschirmeinrichtung 18 ein in dem Kraftfahrzeug eingestellter oder ein für ein Einstellen in dem Kraftfahrzeug ausgewählter Fahrmodus und/oder Ambientemodus angezeigt werden.

Die Bildschirmeinrichtung 18 kann eine berührsensitive Oberfläche 22 aufweisen, mittels welcher über einen Kontakt eine erste Benutzereingabe eines Fahrzeuginsassen empfangbar ist. Diese berührsensitive Oberfläche 22 kann sich insbesondere über die gesamte Anzeigefläche 20 erstrecken. Insbesondere kann das mittels der Bildschirmeinrichtung 18 bereitgestellte erste Lichtsignal in Abhängigkeit von der empfangenen ersten Benutzereingabe angepasst werden. Insbesondere kann in Abhängigkeit von der ersten Benutzereingabe ein Blättern durch ein Menü, welches insbesondere mehrere Fahrmodi und/oder mehrere Ambientemodi zur Auswahl anbietet, mittels der Bildschirmeinrichtung 18 angezeigt werden. Die mittels der Bildschirmeinrichtung 18 ausgebbare Anzeige kann animiert sein. Die Bildschirmeinrichtung 18 ist dazu eingerichtet, situationsbedingt Informationen anzuzeigen. Ist mittels der Bildschirmeinrichtung 18 ein Schneeprofil als Fahrprofil anzuzeigen, dann kann über die Anzeigefläche 20 eine Schneeanimation angezeigt werden. Die Anzeigefläche 20 der Bildschirmeinrichtung 18 kann in mehrere einzeln ansteuerbare Flächen unterteilt sein.

Die Bedienvorrichtung 10 umfasst des Weiteren ein Ringelement 24. Die Bedienvorrichtung 10 kann dazu eingerichtet sein, eine durch ein Verstellen des Ringelements 24 von der ersten Drehstellung in die zweite Drehstellung charakterisierte zweite Benutzereingabe zu empfangen. Dieses Ringelement 24 ist die Anzeigefläche 20 radial umschließend angeordnet. Das Ringelement 24 ist dazu eingerichtet, um eine Drehachse 26 zwischen jeweiligen unterschiedlichen vorgegebenen Drehstellungen verdreht zu werden. Die Drehachse 26 fällt vorliegend mit einer Mittelachse des Ringelements 24 sowie mit einem Mittelpunkt der kreisrunden Anzeigefläche 20 der Bildschirmeinrichtung 18 zusammen. Das Ringelement 24 ist vorliegend die Bildschirmeinrichtung 18 umfangsseitig umschließend angeordnet. Für ein Verstellen des Ringelements 24 zwischen jeweiligen für das Ringelement 24 vorgegebenen Drehstellungen ist das Ringelement 24 um die Bildschirmeinrichtung 18 herum drehbar. Hierbei kann die Bildschirmeinrichtung 18 relativ zu dem Basiselement 16 in seiner Bewegung um die Drehachse 26 fixiert sein, wobei das Ringelement 24 um die Drehachse 26 relativ zu der Bildschirmeinrichtung 18 und dem Basiselement 16 verdrehbar ist. Vorliegend ist das Ringelement 24 in zwölf unterschiedlichen Drehstellungen um die Drehachse 26 anordenbar, wobei die jeweiligen Drehstellungen jeweils einen gleichen Winkelabstand zu benachbarten Drehstellungen aufweisen. Die Drehstellungen sind somit gleichmäßig über einen Umfang des Ringelements 24 verteilt. Hierdurch sind die jeweiligen Drehstellungen um 30 Grad zueinander versetzt angeordnet. In den jeweiligen Drehstellungen ist das Ringelement 24 mittels einer in den Fig. nicht gezeigten Arretiereinrichtung mit einer durch die Arretiereinrichtung vorgegebenen Haltekraft zu halten. Hierdurch kann die jeweilige Drehstellung des Ringelements 24 besonders präzise eingestellt werden und eine Gefahr eines unbeabsichtigten Verstellens des Ringelements 24 kann besonders gering gehalten werden. Die Arretiereinrichtung kann eine mechanische Rasterung aufweisen, über welche die jeweiligen Drehstellungen für das Ringelement 24 vorgegeben sind. Alternativ oder zusätzlich kann das Ringelement 24 in der jeweiligen eingestellten Drehstellung über ein Magnetfeld mit der vorgegebenen Haltekraft gehalten werden. Um das Ringelement 24 aus einer ersten Drehstellung in eine zweite Drehstellung verstellen zu können, ist die vorgegebene, das Ringelement 24 in der ersten Drehstellung haltende Haltekraft zu überwinden.

Hierbei kann das Verstellen des Ringelements 24 aus der ersten Drehstellung in die zweite Drehstellung ein Blättern durch ein Menü repräsentieren, wobei das Blättern durch das Menü mittels der Bildschirmeinrichtung 18 angezeigt werden kann. Hierbei kann das Menü mehrere Fahrzeugmodi und/oder mehrere Ambientemodi charakterisieren, aus welchen der einzustellende Fahrmodus und/oder der einzustellende Ambientemodus ausgewählt werden können.

Die Bedienvorrichtung 10 umfasst des Weiteren eine Steuereinrichtung 28, welche vorliegend schematisch mit einem Kästchen gekennzeichnet ist. Die Steuereinrichtung 28 ist dazu eingerichtet, das Anzeigen des Fahrmodus und/oder des Ambientemodus durch die Bildschirmeinrichtung 18 auszulösen. Hierbei kann die Steuereinrichtung 28 die Bildschirmeinrichtung 18 derart ansteuern, dass die Bildschirmeinrichtung 18 den eingestellten oder den in Abhängigkeit von der ersten Benutzereingabe und/oder der zweiten Benutzereingabe ausgewählten Fahrmodus anzeigt. Alternativ oder zusätzlich kann die Steuereinrichtung 28 die Bildschirmeinrichtung 18 derart ansteuern, dass die Bildschirmeinrichtung 18 den im Kraftfahrzeug eingestellten und/oder den in Abhängigkeit von der ersten Benutzereingabe und/oder der zweiten Benutzereingabe ausgewählten einzustellenden Ambientemodus anzeigt. Weiterhin ist die Steuereinrichtung 28 dazu eingerichtet, von der Bildschirmeinrichtung 18 die erste Benutzereingabe zu empfangen und von dem Ringelement 24 die zweite Benutzereingabe zu empfangen. In Abhängigkeit von der empfangenen ersten Benutzereingabe und/oder der empfangenen zweiten Benutzereingabe kann die Steuereinrichtung 28 den einzustellenden ausgewählten Fahrmodus und/oder den einzustellenden ausgewählten Ambientemodus ermitteln. Weiterhin ist die Steuereinrichtung 28 dazu eingerichtet, ein Steuersignal für eine Recheneinrichtung des Kraftfahrzeugs bereitzustellen, wobei das Steuersignal den ermittelten im Kraftfahrzeug einzustellenden Fahrmodus und/oder den ermittelten im Kraftfahrzeug einzustellenden Ambientemodus charakterisiert. Somit kann die Steuereinrichtung 28 über das Bereitstellen des Steuersignals das Einstellen des ausgewählten Fahrmodus und/oder das Einstellen des ausgewählten Ambientemodus in dem Kraftfahrzeug auslösen.

Um den angezeigten Fahrmodus und/oder den angezeigten Ambientemodus für einen Fahrzeuginsassen besonders gut erkennbar mittels der Bedienvorrichtung 10 darstellen zu können, umfasst die Bedienvorrichtung 10 vorliegend ein Leuchtringelement 30. Dieses Leuchtringelement 30 ist dazu eingerichtet, ein das Ringelement 24 radial umschließendes, zweites Lichtsignal bereitzustellen. Das Leuchtringelement 30 kann insbesondere dazu eingerichtet sein, das zweite Lichtsignal mit einer Farbe des RGB-Farbraums auszugeben. Vorliegend ist das Leuchtringelement 30 an dem Basiselement 16 angeordnet. Weiterhin kann mittels des Leuchtringelements 30 eine Aufmerksamkeit des Fahrzeuginsassen auf das Ringelement 24 gelenkt werden, wodurch ein Fahrzeuginsasse das Ringelement 24 im Fahrzeuginnenraum besonders einfach finden kann. Hierdurch kann eine Unfallgefahr des Kraftfahrzeugs besonders gering gehalten werden, da ein aufwendiges Suchen nach der Bedienvorrichtung 10 für den Fahrzeuginsassen, insbesondere einen Fahrer des Kraftfahrzeugs, unterbleiben kann. Weiterhin kann das Leuchtringelement 30 über eine Farbe des ausgegebenen weiteren Lichtsignals und/oder eine Dynamik des ausgegebenen weiteren Lichtsignals den Fahrmodus und/oder den Ambientemodus anzeigen. Hierbei können die Farbe des weiteren Lichtsignals und/oder die Dynamik des weiteren Lichtsignals mit einer Farbe beziehungsweise einer Dynamik der mittels der Bildschirmeinrichtung 18 ausgegebenen Anzeige des Fahrmodus und/oder des Ambientemodus übereinstimmen. Hierdurch ist für einen Fahrzeuginsassen der mittels der Bedienvorrichtung 10 angezeigte Fahrmodus und/oder Ambientemodus besonders einfach und schnell erkennbar, wodurch für einen Fahrer besonders wenig Aufmerksamkeit notwendig ist, um den angezeigten Fahrmodus und/oder den Ambientemodus zu erkennen, wodurch der Fahrer seine Aufmerksamkeit auf eine Verkehrssituation lenken kann, in welcher sich das Kraftfahrzeug befindet. Hierdurch kann eine besonders hohe Verkehrssicherheit ermöglicht werden.

Die Bedienvorrichtung 10 kann des Weiteren einen Aluminiumring 32 aufweisen, welcher das Ringelement 24 radial nach innen und somit zu der Bildschirmeinrichtung 18 abgrenzend angeordnet ist. Das Ringelement 24 kann somit optisch radial nach außen durch das Leuchtringelement 30 und radial nach innen durch den Aluminiumring 32 begrenzt werden, wodurch der Fahrzeuginsasse das Ringelement 24 besonders einfach und schnell finden kann. Darüber hinaus kann der Aluminiumring 32 eine Beschädigungsgefahr für die Bildschirmeinrichtung 18 besonders gering halten, indem der Aluminiumring 32 ein unmittelbares Anliegen des Ringelements 24 an der Bildschirmeinrichtung 18 unterbindet. Stattdessen kann der Aluminiumring 32 relativ zu der Bildschirmeinrichtung 18 fixiert sein, wodurch bei einem Drehen das Ringelement 24 um die Drehachse 26 entlang des Aluminiumrings 32 läuft. Hierbei kann das Ringelement 24 entlang des Aluminiumrings 32 gleiten.

Vorliegend umfasst die Bedienvorrichtung 10 des Weiteren einen Näherungssensor 34, welcher schematisch mit einem Kästchen gekennzeichnet ist. Der Näherungssensor 34 ist dazu eingerichtet, eine Annäherung eines Objekts und/oder einer Person zu detektieren, bevor ein unmittelbarer Kontakt des Näherungssensors 34 mit dem Objekt beziehungsweise der Person besteht. Insbesondere ist der Näherungssensor 34 dazu eingerichtet, eine Annäherung des Objekts beziehungsweise der Person an die Bedienvorrichtung 10 zu ermitteln, ohne dass beziehungsweise bevor ein Kontakt des Objekts beziehungsweise der Person mit der Bedienvorrichtung 10 besteht. Wenn mittels des Näherungssensors 34 eine Annäherung des Objekts und/oder der Person an die Bedienvorrichtung 10 näher als einen vorgegebenen Grenzabstand ermittelt wird, dann wird festgestellt, dass eine dritte Benutzereingabe erfolgt ist. Somit ist der Näherungssensor 34 dazu eingerichtet, die durch die Annäherung an den Näherungssensor 34 näher als den vorgegebenen Grenzabstand charakterisierte dritte Benutzereingabe zu empfangen. Diese festgestellte dritte Benutzereingabe kann der Näherungssensor 34 für die Steuereinrichtung 28 bereitstellen. Bei Empfangen der dritten Benutzereingabe kann die Steuereinrichtung 28 ein Anpassen der mittels der Bildschirmeinrichtung 18 bereitgestellten Anzeige auslösen. Das bedeutet, dass die Steuereinrichtung 28 dazu eingerichtet ist, bei Empfangen der dritten Benutzereingabe die Bildschirmeinrichtung 18 in einen Bereitschaftsmodus zu verstellen, wobei das Verstellen der Bildschirmeinrichtung 18 in den Bereitschaftsmodus durch das Anpassen der mittels der Bildschirmeinrichtung 18 ausgegebenen beziehungsweise ausgebbaren Anzeige charakterisiert ist. Durch das in Bereitschaft Versetzen der Bildschirmeinrichtung 18 beim Annähern der Person beziehungsweise des Objekts an die Bedienvorrichtung 10 über den Näherungssensor 34 kann das Anzeigen des Fahrmodus und/oder des Ambientemodus mittels der Bildschirmeinrichtung 18 gestartet oder angepasst werden und/oder die Bildschirmeinrichtung 18 in Bereitschaft versetzt werden, über die berührsensitive Oberfläche 22 die erste Benutzereingabe zu empfangen.

Die Bildschirmeinrichtung 18 und/oder das Ringelement 24 können relativ zu dem Basiselement 16 entlang der Drehachse 26 und somit axial verschiebbar, insbesondere drückbar, ausgebildet sein. Hierdurch ist mittels der Bedienvorrichtung 10 eine durch ein Verschieben der Bildschirmeinrichtung 18 und/oder des Ringelements 24 entlang der Drehachse 26 charakterisierte vierte Benutzereingabe empfangbar. Diese vierte Benutzereingabe kann insbesondere ein Bestätigen einer durch die erste Benutzereingabe und/oder die zweite Benutzereingabe getätigten Auswahl des Fahrmodus und/oder des Ambientemodus charakterisieren. Die Bedienvorrichtung 10 ist somit bei einem besonders einfachen Aufbau dazu eingerichtet, besonders viele unterschiedliche Benutzereingaben zu empfangen.

Die Bedienvorrichtung 10 ermöglicht einen Verbau eines Drehstellers mit Display, vorliegend der Bildschirmeinrichtung 18, in einem automotiven Kontext. Zumindest die Bildschirmeinrichtung 18 und/oder das Ringelement 24 können in der Aufnahme des Interieurbauteils 12 versenkbar ausgebildet sein, um bei einem Unfall für Fahrzeuginsassen bei einem Kopfaufschlag auf die Bedienvorrichtung 10 eine Verletzungsgefahr für den Fahrzeuginsassen besonders gering zu halten.

Die Bedienvorrichtung 10 ermöglicht eine Emotionalisierung des Kraftfahrzeugs. Weiterhin ist die Bedienvorrichtung 10 dazu eingerichtet, einen Makrobefehl für eine bestimmte Stimmungslage zu empfangen und eine dem Makrobefehl entsprechende Anpassung von emotionalen Teilnehmern in einem einzigen Befehl, vorliegend über das Steuersignal, anstelle einer Einzelansteuerung der Kraftfahrzeugkomponenten auszulösen. Unter der Anpassung der emotionalen Teilnehmer, bei welchen es sich um die Kraftfahrzeugkomponenten des Kraftfahrzeugs handelt, ist ein Klimaoffset und/oder ein Sitzlehnenwinkel und/oder eine Sitzheizung und/oder ein frei programmierbares Kombiinstrument und/oder ein Anzeigebedienteil und/oder ein Soundsystem und/oder eine Playlist und/oder ein Ambientelicht zu verstehen.

Bei der Bedienvorrichtung 10 handelt es sich um einen Fahrerlebnisschalter. Die Bedienvorrichtung 10 umfasst als statische Bestandteile das Basiselement 16 und das in dem Basiselement 16 integrierte Leuchtringelement, welche insbesondere in Einbaulage der Bedienvorrichtung 10 relativ zu dem Interieurbauteil 12 fixiert sind. Weiterhin kann die Bedienvorrichtung 10 als drückbare und somit relativ zu den statischen Bestandteilen in Axialrichtung verschiebbare Bestandteile die Bildschirmeinrichtung 18 mit der berührsensitiven Oberfläche 22 sowie den Aluminiumring 32 und das Ringelement 24 aufweisen. Der Näherungssensor 34 kann die berührsensitive Oberfläche 22 bereitstellen. Die Bildschirmeinrichtung 18 ist vorliegend rund ausgebildet und insbesondere vollflächig für die Anzeige nutzbar, worunter zu verstehen ist, dass eine eine gesamte der Umgebung zugewandte Außenoberfläche der Bedienvorrichtung 10 bereitstellende Fläche der Bildschirmeinrichtung 18 durch die Anzeigefläche 20 bereitgestellt wird.

### Bezugszeichenliste

- 10: Bedienvorrichtung
- 12: Interieurbauteil
- 14: Befestigungsarm
- 16: Basiselement
- 18: Bildschirmeinrichtung
- 20: Anzeigefläche
- 22: berührsensitive Oberfläche
- 24: Ringelement
- 26: Drehachse
- 28: Steuereinrichtung
- 30: Leuchtringelement
- 32: Aluminiumring
- 34: Näherungssensor

## Patentansprüche

1. Bedienvorrichtung (10) für ein Kraftfahrzeug, mit
- einem Basiselement (16), welches dazu eingerichtet ist, an einem Interieurbauteil (12) befestigt zu werden,
- einer Bildschirmeinrichtung (18), welche dazu eingerichtet ist, einen Fahrmodus und/oder einen Ambientemodus des Kraftfahrzeugs anzuzeigen, und welche eine berührsensitive Oberfläche (20) aufweist, welche dazu eingerichtet ist, eine erste Benutzereingabe zu empfangen,
- einem Ringelement (24), welches die Bildschirmeinrichtung (18) umfangsseitig umschließend angeordnet ist, welches dazu eingerichtet ist, relativ zu dem Basiselement (16) in unterschiedlichen Drehstellungen angeordnet zu werden, und welches dazu eingerichtet ist, eine durch ein Verstellen des Ringelements (24) zwischen den Drehstellungen charakterisierte, zweite Benutzereingabe zu empfangen, und
- einer Steuereinrichtung (28), welche dazu eingerichtet ist, in Abhängigkeit von der ersten Benutzereingabe und/oder der zweiten Benutzereingabe ein Steuersignal bereitzustellen, welches einen einzustellenden Fahrmodus und/oder einen einzustellenden Ambientemodus des Kraftfahrzeugs charakterisiert, und welche dazu eingerichtet ist, das Anzeigen des Fahrmodus und/oder des Ambientemodus mittels der Bildschirmeinrichtung (18) auszulösen, die Bedienvorrichtung wird **dadurch gekennzeichnet, dass**
- ein Näherungssensor (34) vorgesehen ist, welcher dazu eingerichtet ist, eine durch eine Annäherung an den Näherungssensor (34) charakterisierte, dritte Benutzereingabe zu empfangen, wobei die Steuereinrichtung (28) dazu eingerichtet ist, bei Empfangen der dritten Benutzereingabe die Bildschirmeinrichtung (18) in einen Bereitschaftsmodus zu verstellen, und/oder
- ein Leuchtringelement (30) vorgesehen ist, welches dazu eingerichtet ist, ein das Ringelement (24) umschließendes Lichtsignal auszugeben.

2. Bedienvorrichtung (10) nach Anspruch 1, wobei die Steuereinrichtung (28) dazu eingerichtet ist, ein Anzeigen des eingestellten Fahrmodus oder eines in Abhängigkeit von der ersten Benutzereingabe und/oder der zweiten Benutzereingabe für ein Einstellen ausgewählten Fahrmodus mittels der Bildschirmeinrichtung (18) auszulösen.

3. Bedienvorrichtung (10) nach Anspruch 1 oder 2, wobei die Steuereinrichtung (28) dazu eingerichtet ist, ein Anzeigen des eingestellten Ambientemodus und/oder ein Anzeigen eines in Abhängigkeit von der ersten Benutzereingabe und/oder der zweiten Benutzereingabe für ein Einstellen ausgewählten Ambientemodus mittels der Bildschirmeinrichtung (18) auszulösen.

4. Bedienvorrichtung (10) nach einem der vorhergehenden Ansprüche, wobei eine Arretiereinrichtung vorgesehen ist, welche dazu eingerichtet ist, das Ringelement (24) mechanisch oder elektromagnetisch in den jeweiligen Drehstellungen zu halten.

5. Bedienvorrichtung (10) nach Anspruch 4, wobei das Ringelement (24) dazu eingerichtet ist, in jeweiligen um 30 Grad zueinander versetzten Drehstellungen arretiert zu werden.

6. Bedienvorrichtung (10) nach einem der vorhergehenden Ansprüche, wobei die Bildschirmeinrichtung (18) von einem zu der Bildschirmeinrichtung (18) fixierten Aluminiumring (32) radial umschlossen ist, welcher von dem Ringelement (24) radial umschlossen ist.

7. Bedienvorrichtung (10) nach einem der vorhergehenden Ansprüche, wobei für ein Betätigen die Bildschirmeinrichtung (18) und/oder das Ringelement (24) relativ zu dem Basiselement (16) axial verschiebbar ausgebildet sind/ist.

8. Kraftfahrzeug mit einer Bedienvorrichtung (10) nach einem der vorhergehenden Ansprüche.

## Claims

1. An operator control apparatus (10) for a motor vehicle, comprising:
- a base element (16), which is configured to be fastened to an interior component (12),
- a screen device (18), which is configured to display a driving mode and/or an ambient mode of the motor vehicle and which has a touch-sensitive surface (20) which is configured to receive a first user input,
- a ring element (24), which is arranged in a manner encompassing the screen device (18) on the circumference, which ring element is configured to be arranged in different rotational positions relative to the base element (16), and which is configured to receive a second user input **characterized by** an adjustment of the ring element (24) between the rotational positions, and
- a control device (28), which is configured to provide a control signal, as a function of the first user input and/or the second user input, which control signal characterizes a driving mode to be set and/or an ambient mode to be set of the motor vehicle, and which is configured to trigger the display of the driving mode and/or the ambient mode by means of the screen device (18),
the operator control apparatus being **characterized in that**
- a proximity sensor (34) is provided, which is configured to receive a third user input **characterized by** an approach to the proximity sensor (34), wherein the control device (28) is configured to adjust the screen device (18) into a standby mode upon receiving the third user input, and/or
- a light ring element (30) is provided, which is configured to output a light signal encompassing the ring element (24).

2. The operator control apparatus (10) according to claim 1, wherein the control device (28) is configured to trigger a display of the set driving mode or of a driving mode selected for setting as a function of the first user input and/or the second user input by means of the screen device (18).

3. The operator control apparatus (10) according to claim 1 or 2, wherein the control device (28) is configured to trigger a display of the set ambient mode and/or a display of an ambient mode selected for setting as a function of the first user input and/or the second user input by means of the screen device (18).

4. The operator control apparatus (10) according to any of the preceding claims, wherein a locking device is provided which is configured to hold the ring element (24) mechanically or electromagnetically in the respective rotational positions.

5. The operator control apparatus (10) according to claim 4, wherein the ring element (24) is configured to be locked in respective rotational positions offset by 30 degrees relative to one another.

6. The operator control apparatus (10) according to any of the preceding claims, wherein the screen device (18) is radially enclosed by an aluminum ring (32) fixed to the screen device (18), which aluminum ring is radially enclosed by the ring element (24).

7. The operator control apparatus (10) according to any of the preceding claims, wherein the screen device (18) and/or the ring element (24) are/is designed to be axially displaceable relative to the base element (16) for actuation.

8. A motor vehicle having an operator control apparatus (10) according to any of the preceding claims.

## Revendications

1. Dispositif de manipulation (10) pour un véhicule automobile, comportant
- un élément de base (16) conçu pour être fixé à un composant intérieur (12),
- un appareil formant écran (18) configuré pour afficher un mode de conduite et/ou un mode d'ambiance du véhicule automobile et présentant une surface sensible au toucher (20) configurée pour recevoir une première entrée utilisateur,
- un élément annulaire (24) disposé de manière circonférentielle et entourant l'appareil formant écran (18), lequel élément annulaire est conçu pour être disposé dans différentes positions de rotation par rapport à l'élément de base (16) et est conçu pour recevoir une deuxième entrée utilisateur **caractérisée par** une variation de l'élément annulaire (24) entre les positions de rotation, et
- un appareil de commande (28) configuré pour fournir, en fonction de la première entrée utilisateur et/ou de la deuxième entrée utilisateur, un signal de commande qui caractérise un mode de conduite à régler et/ou un mode d'ambiance à régler du véhicule automobile, et qui est configuré pour déclencher l'affichage du mode de conduite et/ou du mode d'ambiance au moyen de l'appareil formant écran (18),
le dispositif de manipulation est **caractérisé en ce que**
- un capteur de proximité (34) est prévu, lequel est configuré pour recevoir une troisième entrée utilisateur **caractérisée par** un rapprochement du capteur de proximité (34), dans lequel l'appareil de commande (28) est configuré pour faire varier l'appareil formant écran (18) dans un mode d'attente en cas de réception de la troisième entrée utilisateur, et/ou
- un élément annulaire lumineux (30) est prévu, lequel est configuré pour émettre un signal lumineux entourant l'élément annulaire (24).

2. Dispositif de manipulation (10) selon la revendication 1, dans lequel l'appareil de commande (28) est configuré pour déclencher un affichage du mode de conduite réglé ou d'un mode de conduite sélectionné pour un réglage en fonction de la première entrée utilisateur et/ou de la deuxième entrée utilisateur au moyen de l'appareil formant écran (18).

3. Dispositif de manipulation (10) selon la revendication 1 ou 2, dans lequel l'appareil de commande (28) est configuré pour déclencher un affichage du mode d'ambiance réglé et/ou un affichage d'un mode d'ambiance sélectionné pour un réglage en fonction de la première entrée utilisateur et/ou de la deuxième entrée utilisateur au moyen de l'appareil formant écran (18).

4. Dispositif de manipulation (10) selon l'une des revendications précédentes, dans lequel un appareil de blocage est prévu, lequel est conçu pour maintenir l'élément annulaire (24) dans les positions de rotation respectives de manière mécanique ou électromagnétique.

5. Dispositif de manipulation (10) selon la revendication 4, dans lequel l'élément annulaire (24) est conçu pour être bloqué dans des positions de rotation respectives décalées de 30 degrés les unes par rapport aux autres.

6. Dispositif de manipulation (10) selon l'une des revendications précédentes, dans lequel l'appareil formant écran (18) est entouré radialement par un anneau en aluminium (32) fixé à l'appareil formant écran (18), lequel anneau en aluminium est entouré radialement par l'élément annulaire (24).

7. Dispositif de manipulation (10) selon l'une des revendications précédentes, dans lequel, pour un actionnement, l'appareil formant écran (18) et/ou l'élément annulaire (24) sont conçus de manière à pouvoir être déplacés axialement par rapport à l'élément de base (16).

8. Véhicule automobile comportant un dispositif de manipulation (10) selon l'une des revendications précédentes.
